(19) Europäisches Patentamt / European Patent Office / Office européen des brevets

(11) **EP 2 751 480 B1**

(12) **EUROPÄISCHE PATENTSCHRIFT**

(45) Veröffentlichungstag und Bekanntmachung des Hinweises auf die Patenterteilung:
**01.01.2020 Patentblatt 2020/01**

(21) Anmeldenummer: **12748696.7**

(22) Anmeldetag: **21.08.2012**

(51) Int Cl.:
*F22B 1/00* (2006.01)   *F22B 29/08* (2006.01)

(86) Internationale Anmeldenummer:
**PCT/EP2012/066234**

(87) Internationale Veröffentlichungsnummer:
**WO 2013/030036 (07.03.2013 Gazette 2013/10)**

(54) **SOLARTHERMISCHES KRAFTWERK**

SOLAR-THERMAL POWER PLANT

CENTRALE HÉLIOTHERMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.08.2011 DE 102011081920**

(43) Veröffentlichungstag der Anmeldung:
**09.07.2014 Patentblatt 2014/28**

(73) Patentinhaber: **Solarlite CSP Technology GmbH 17179 Duckwitz (DE)**

(72) Erfinder: **KRÜGER, Joachim 17179 Duckwitz (DE)**

(74) Vertreter: **dompatent von Kreisler Selting Werner - Partnerschaft von Patent- und Rechtsanwälten mbB Deichmannhaus am Dom Bahnhofsvorplatz 1 50667 Köln (DE)**

(56) Entgegenhaltungen:
**EP-A2- 2 053 242       WO-A2-2010/145970
DE-A1- 10 326 027    DE-A1-102006 021 972
DE-A1-102009 047 204   DE-C1- 10 152 968**

EP 2 751 480 B1

## Beschreibung

Die vorliegende Erfindung betrifft ein solarthermisches Kraftwerk mit Direktverdampfung eines Wärmeträgers. Es existiert eine Vielzahl von unterschiedlichen Arten von solarthermischen Kraftwerken. Neben Solarturmkraftwerken und Fresnel-Kollektoranlagen existieren Parabolrinnenkraftwerke, bei denen die Sonne über parabolrinnenförmige Reflektoren auf rohrförmige Absorber reflektiert wird, durch die ein Wärmeträgermedium geleitet wird. Mehrere dieser parabolrinnenförmigen Reflektoren, die auch als Parabolrinnensegmente bezeichnet werden, bilden einen Parabolrinnenkollektor.

Parabolrinnenkraftwerke werden häufig zur Dampferzeugung eingesetzt, um über einen herkömmlichen Wasserdampfkreislauf eine Dampfturbine zu betreiben. Dabei kommen grundsätzlich zwei unterschiedliche Konstruktionen zum Einsatz. Bei weitverbreiteten Systemen wird über die Parabolrinnenkollektoren ein Öl erhitzt, das über einen Wärmetauscher die thermische Energie an einen Wasserdampfkreislauf abgibt. Es findet somit eine indirekte Verdampfung statt. Ferner ist es bekannt, dass die Parabolrinnenkollektoren Teil des Wasserdampfkreislaufes sind und in den Parabolrinnenkollektoren die Verdampfung stattfindet. Bei einem derartigen System wird auch von der Direktverdampfung gesprochen. Derartige Kraftwerke sind beispielsweise aus EP 2 053 242 A2 und DE 101 52 968 C1 bekannt.

Systeme, bei denen ein Ölkreislauf zum Einsatz kommt, haben den Nachteil, dass es durch die indirekte Verdampfung zu irreversiblen Wärmeverlusten kommt.

Bei den bekannten Parabolrinnenkraftwerken mit Direktverdampfung sind die Parabolrinnenkollektoren zumeist in Reihen angeordnet und parallel angeschlossen. Derartige Anordnungen sind beispielsweise in DE 10 2006 021972 A1, WO 2010/145970 A2 und DE 103 26 027 A1 beschrieben. Dabei erfolgt eine Zufuhr des Wärmeträgers an dem einen Ende der Reihen über eine gemeinsame Zuführleitung und einer Abnahme des erhitzten Wärmeträgers an dem anderen Ende der Reihe über eine gemeinsame Sammelleitung. Die Sammelleitungen, die den verdampften Wärmeträger transportieren, haben zusammen mit den gemeinsamen Zuführleitungen einen großen Platzbedarf in einem Solarfeld. Da die Reihen der Parabolrinnenkollektoren stets in Nord-Süd-Richtung ausgerichtet sind, benötigt eine derartige Anordnung darüber hinaus einen großen Platzbedarf in diese Richtung, um die in der Sammelleitung gewünschten Wärmeträgereigenschaften wie Temperatur und Druck leisten zu können. Die Reihen von Parabolrinnenkollektoren besitzen häufig eine Länge von 700m und mehr, so dass ein derartiges solarthermisches Kraftwerk einen großen Platzbedarf in Nord-Süd-Richtung benötigt. Daher sind viele Grundstücke, insbesondere wenn diese in der Nähe von Elektrizitätseinspeisungspunkten angeordnet sind, nur bedingt für solarthermische Kraftwerke geeignet.

Parabolrinnenkollektoren bedürfen darüber hinaus auch einer regelmäßigen Wartung, bei der ein direktes Heranfahren mit Wartungsfahrzeugen von Vorteil ist. Ein Zugang zwischen die Reihen der Parabolrinnenkollektoren bei den bekannten solarthermischen Kraftwerken ist jedoch aufgrund der gemeinsamen Zuleitungen und gemeinsamen Sammelleitung nur bedingt möglich. Um einen Zugang zwischen die Reihen zu ermöglichen, werden daher die Zuleitungen oder Sammelleitungen häufig in großer Höhe, beispielsweise mindestens 5m, installiert, um die Zufahrt für Wartungsfahrzeuge zu ermöglichen. Dies bedeutet einen hohen konstruktionstechnischen Aufwand.

DE 10 2009 047 204 A1 offenbart ein solarthermisches Kraftwerk gemäß dem Oberbegriff von Anspruch 1.

Daher ist es die Aufgabe der vorliegenden Erfindung, ein solarthermisches Kraftwerk bereitzustellen, das gegenüber den bekannten Kraftwerken in Nord-Süd-Richtung einen verringerten Platzbedarf aufweist und bei dem der Zugang zu den einzelnen Kollektoren zu Wartungszwecken vereinfacht ist.

Das erfindungsgemäße solarthermische Kraftwerk wird definiert durch die Merkmale von Patentanspruch 1.

Die Erfindung sieht ein solarthermisches Kraftwerk mit Direktverdampfung eines Wärmeträgers mit Parabolrinnenkollektoren vor, die jeweils aus mehreren Parabolrinnensegmenten bestehen, wobei über die Parabolrinnenkollektoren thermische Energie des Sonnenlichts dem Wärmeträger zuführbar ist, und mit mindestens einer Dampfturbine, die über den verdampften Wärmeträger antreibbar ist. Die Erfindung ist gekennzeichnet durch die Anordnung der Parabolrinnenkollektoren in mehreren Schleifen ("loops"), wobei die Schleifen parallel angeschlossen sind und eine erste Anzahl der Parabolrinnenkollektoren einen Verdampfer bildet und eine zweite Anzahl der Parabolrinnenkollektoren einen Überhitzer bildet. Der parallele Anschluss der mehreren Schleifen der Parabolrinnenkollektoren erfolgt über eine gemeinsame Zuführleitung und eine gemeinsame Sammelleitung.

Durch die erfindungsgemäße Anordnung der Parabolrinnenkollektoren in mehreren Schleifen wird ein Rückflusskonzept erreicht. Dadurch kann der Platzbedarf des solarthermischen Kraftwerks in Nord-Süd-Richtung, in die die Parabolrinnenkollektoren angeordnet sind, deutlich reduziert werden. Darüber hinaus bewirkt die Anordnung der Parabolrinnenkollektoren in mehreren Schleifen, wobei die Schleifen parallel angeschlossen sind, dass die Anschlussleitungen, wie die gemeinsame Zuführleitung und die gemeinsame Sammelleitung, von einer Seite an die Schleifen herangeführt werden können. Daher ist ein Zugang zu den Schleifen und somit zu den Parabolrinnenkollektoren von der anderen Seite her in vorteilhafter Weise möglich. Zwischen den Schleifen ist somit ein Zugang möglich, so dass jeder Parabolrinnenkollektor zumindest von einer Seite erreichbar ist, so dass die Wartung der Parabolrinnenkollektoren vereinfacht ist.

Dadurch, dass eine erste Anzahl Parabolrinnenkollektoren einen Verdampfer bilden und eine zweite Anzahl der Parabolrinnenkollektoren einen Überhitzer bilden, sind Verdampfer und Überhitzer getrennt voneinander ausgebildet und können somit auf vorteilhafte Weise gesteuert werden. Durch die Überhitzung des Dampfes ist ein besonders hoher Wirkungsgrad des solarthermischen Kraftwerks möglich.

Durch das Vorsehen einer Schleifenanordnung der Parabolrinnenkollektoren können darüber hinaus die Anschlussleitungen für die Parabolrinnenkollektoren sehr kurz gehalten werden, indem die weiteren Komponenten des solarthermischen Kraftwerks, wie beispielsweise die Dampfturbine, ein Leitstand *oder die übrige Anlagenprozesstechnik,* unmittelbar neben den Schleifen von Parabolrinnenkollektoren angeordnet sind, und zwar in dem Bereich der Anschlussleitungen der Schleifen. Dadurch kann insbesondere eine Sammelleitung, die den verdampften Wärmeträger transportiert, sehr kurz gehalten werden, wodurch die Kosten für eine derartige Leitung sowie der Wärme- und Druckverlust, der bei einer längeren Leitung vorliegen würde, deutlich reduziert wird. Auch ist der Platzbedarf für die Anschlussleitungen deutlich reduziert. Dadurch kann ein besonders kostengünstiges und energetisch effektives, solarthermisches Kraftwerk verwirklicht werden.

Es kann vorgesehen sein, dass eine Schleife aus vier bis acht Parabolrinnenkollektoren besteht. In einem besonders bevorzugten Ausführungsbeispiel ist vorgesehen, dass eine Schleife aus einer geraden Anzahl N von Parabolrinnenkollektoren besteht. Die Anzahl N kann beispielsweise zwei, vier, sechs oder acht Parabolrinnenkollektoren sein. Die Erfindung kann vorsehen, dass eine Schleife aus einer ersten Reihe von Parabolrinnenkollektoren und einer zu der ersten Reihe parallel angeordneten zweiten Reihe von Parabolrinnenkollektoren besteht, wobei die erste und die zweite Reihe an einem ersten Ende zum Bilden der Schleife verbunden sind. An dem zweiten Ende können die Reihen dann an die Anschlussleitungen angeschlossen sein. Eine derartige Anordnung ermöglicht die Anordnung der Parabolrinnenkollektoren in Schleifen auf eine besonders vorteilhafte Weise. Dabei kann vorgesehen sein, dass die erste und die zweite Reihe jeweils aus $\frac{N}{2}$ Parabolrinnenkollektoren bestehen. Dadurch befinden sich in den parallel angeordneten ersten und zweiten Reihen jeweils gleich viele Parabolrinnenkollektoren, die exakt nebeneinander angeordnet werden können. Dadurch wird der Platzbedarf optimal ausgenutzt und unnötig lange Rohrleitungen werden vermieden.

Es kann vorgesehen sein, dass jeder Parabolrinnenkollektor zwischen acht und zehn Parabolrinnensegmente aufweist. Eine derartige Anordnung hat sich als besonders vorteilhaft erwiesen. In einem besonders bevorzugten Ausführungsbeispiel der Erfindung ist vorgesehen, dass der Verdampfer und der Überhitzer örtlich getrennt angeordnet sind. Dies ermöglicht eine Konstruktion des erfindungsgemäßen solarthermischen Kraftwerks in energetisch besonders vorteilhafter Weise, indem der Verdampfer und Überhitzer in optimaler Weise in Bezug auf die übrigen Kraftwerkskomponenten, wie beispielsweise die Dampfturbine oder die Anlagenprozesstechnik, angeordnet sind, um Leitungen für den Wärmeträger, die einen besonders hohen Platzbedarf oder einen hohen Druckverlust aufweisen und somit energetisch besonders nachteilig sind, wie beispielsweise die Sammelleitung des überhitzten Dampfes, möglichst kurz zu halten.

Dabei kann vorgesehen sein, dass die Kraftwerkskomponenten, wie beispielsweise die Dampfturbine, ein Leitstand und/oder eine Anlagenprozesstechnik, zwischen dem Verdampfer und dem Überhitzer angeordnet sind.

In einem besonders bevorzugten Ausführungsbeispiel der Erfindung ist vorgesehen, dass jede Schleife des Verdampfers aus sechs Parabolrinnenkollektoren und/oder, dass jede Schleife des Überhitzers aus zwei Parabolrinnenkollektoren gebildet ist. Eine derartige Anordnung hat sich als besonders vorteilhaft erwiesen.

Die Schleifen sind ferner ebenfalls parallel zueinander angeordnet, so dass eine zweite Reihe einer Schleife parallel zu der ersten Reihe der benachbarten Schleife angeordnet ist.

Es kann vorgesehen sein, dass jeder Parabolrinnenkollektor des Verdampfers zehn Parabolrinnensegmente und/oder jeder Parabolrinnenkollektor des Überhitzers neun oder zehn Parabolrinnensegmente aufweist.

Die Erfindung kann vorsehen, *dass der Überhitzer* eine Zwischeneinspritzungsanlage aufweist. Über eine Zwischeneinspritzung ist die Temperatur des Wärmeträgers in dem Überhitzer in vorteilhafter Weise regulierbar. Dabei kann vorgesehen sein, dass die Zwischeneinspritzungsanlage zwischen zwei Parabolrinnenkollektoren angeschlossen ist. Bei einem Überhitzer mit zwei Parabolrinnenkollektoren pro Schleife ist die Zwischeneinspritzungsanlage somit zwischen den beiden Parabolrinnenkollektoren der Schleife angeschlossen. Ferner kann vorgesehen sein, dass die Zwischeneinspritzungsanlage an der Sammelleitung des Überhitzers angeschlossen ist, wobei diese Zwischeneinspritzungsanlage beispielsweise mit Speisewasser versorgt wird.

In einem besonders bevorzugten Ausführungsbeispiel der Erfindung ist vorgesehen, dass der Abstand der Mittelachsen der ersten und der zweiten Reihe eine Schleife weniger als das 3-fache der Aperturweite eines Parabolrinnenkollektors beträgt. Insbesondere kann vorgesehen sein, dass der Abstand das 2,4-fache der Aperturweite eines Parabolrinnenkollektors beträgt.

Die Erfindung kann ferner vorsehen, dass der Abstand der Mittelachse der zweiten Reihe einer Schleife zu der Mittelachse der ersten Reihe einer benachbarten Schleife weniger als das 3-fache der Aperturweite eines Parabolrinnenkollektors beträgt. Insbesondere kann dieser Abstand das 2,4-fache der Aperturweite eines Parabolrinnenkollektors betragen. Mit anderen Worten: Bei einer parallelen Anordnung der Schleifen zueinander beträgt der Abstand zwischen den Reihen der Parabolrinnenkollektoren stets beispielsweise das 2,4-fache der Aperturweite eines Parabolrinnenkollektors.

Durch eine derartige Anordnung kann der Platzbedarf des solarthermischen Kraftwerks weiter optimiert werden. Bei einer Aperturweite der Parabolrinnenkollektoren von beispielsweise 4,60m und einem Abstand, der das 2,4-fache der Aperturweite beträgt, ist der Platzbedarf gegenüber einem *Abstand, der das 3-fache der Aperturweite beträgt,* um fast 20% reduziert. Dahingegen ist ein Verlust, der aufgrund von Abschattung der einzelnen Parabolrinnenkollektoren durch andere Parabolrinnenkollektoren entsteht, weniger als 2%.

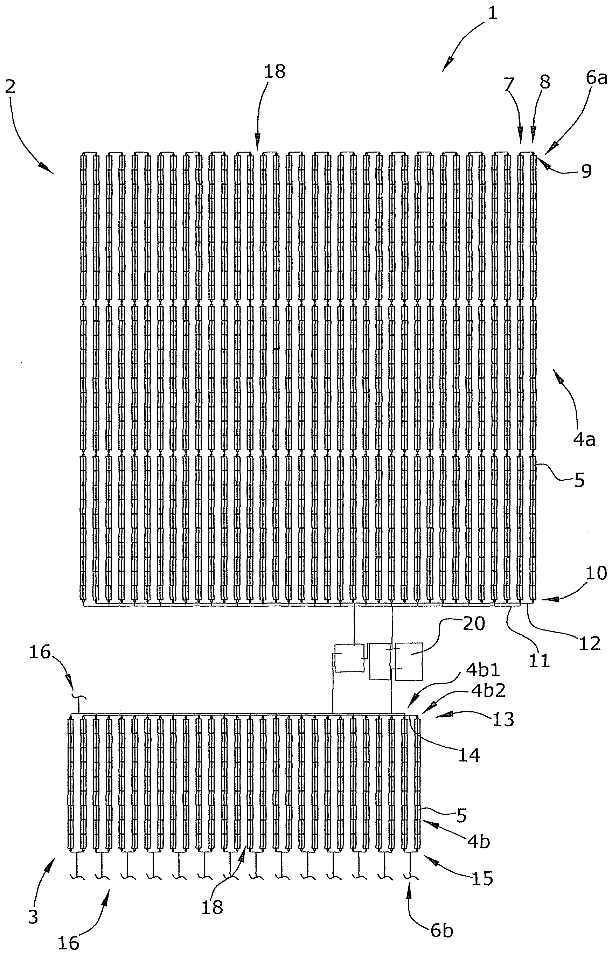

Im Folgenden wird unter Bezugnahme auf die einzige Figur die Erfindung näher erläutert.

Die Figur zeigt eine schematische Draufsicht auf ein erfindungsgemäßes solarthermisches Kraftwerk 1. Das solarthermische Kraftwerk 1 besteht aus einem Verdampfer 2 und einem Überhitzer 3.

Der Verdampfer 2 ist aus einer ersten Anzahl von Parabolrinnenkollektoren 4 und der Überhitzer 3 aus einer zweiten Anzahl von Parabolrinnenkollektoren 4 gebildet.

Die Parabolrinnenkollektoren 4 bestehen jeweils aus mehreren Parabolrinnensegmenten 5. Dabei bestehen die Parabolrinnenkollektoren 4a des Verdampfers 2 jeweils aus zehn Parabolrinnensegmenten 5, wohingegen die Parabolrinnenkollektoren 4b des Überhitzers 3 jeweils aus neun Parabolrinnensegmenten 5 bestehen.

Die Parabolrinnenkollektoren 4a, 4b sind jeweils in mehreren Schleifen 6a, 6b angeordnet, die parallel angeschlossen sind. Dabei bestehen die Schleifen 6a des Verdampfers 2 jeweils aus sechs Parabolrinnenkollektoren 4a. Die Schleifen 6b des Überhitzers 3 bestehen jeweils aus zwei Parabolrinnenkollektoren 4b.

Die Schleifen 6a der Parabolrinnenkollektoren 4a des Verdampfers 2 bestehen jeweils aus einer ersten Reihe 7 von Parabolrinnenkollektoren 4a und einer parallel zu der ersten Reihe 7 angeordneten zweiten Reihe 8 von Parabolrinnenkollektoren 4a. Die erste und die zweite Reihe 7, 8 sind an einem ersten Ende 9 zum Bilden der Schleife 6a miteinander verbunden. Die Schleife 6a besteht aus einer geraden Anzahl N = 6 Parabolrinnenkollektoren 4a. Somit besteht die erste und die zweite Reihe jeweils aus $\frac{N}{2} = 3$ Parabolrinnenkollektoren 4a.

Die Schleifen 6a des Verdampfers 2 sind parallel zueinander angeordnet. An einem zweiten Ende 10 sind Anschlussleitungen an die Kollektoren 4a der Schleifen 6a angeschlossen. Dabei ist an dem zweiten Ende 10 der ersten Reihen 7 der Schleifen 6a eine gemeinsame Zuleitung 11 angeschlossen. An dem zweiten Ende 10 der zweiten Reihen 8 der Schleifen 6a ist eine Sammelleitung 12 angeschlossen, über die der verdampfte Wärmeträger abgeführt wird. Der verdampfte Wärmeträger wird dann über weitere nicht näher bezeichnete Leitungen zu dem Überhitzer 3 geleitet. Die Schleifen 6b des Überhitzers 3 sind jeweils nur aus zwei parallel angeordneten Parabolrinnenkollektoren 4b gebildet. Selbstverständlich ist es auch möglich, dass mehr als zwei Parabolrinnenkollektoren 4b eine Schleife des Überhitzers 3 bilden, wobei dann diese Parabolrinnenkollektoren 4b in ähnlicher Weise wie die Parabolrinnenkollektoren 4a des Verdampfers in ersten und zweiten Reihen zur Bildung der Schleifen 6b angeordnet sein können.

Die parallel angeordneten Parabolrinnenkollektoren 4b einer Schleife 6b sind an einem ersten Ende 15 zum Bilden der Schleife 6b miteinander verbunden. An einem zweiten Ende 13 werden erste Kollektoren 4b1 über eine gemeinsame Zuleitung mit Dampf aus der Sammelleitung 12 des Verdampfers 2 versorgt, wobei der Dampf zuvor in einem nicht dargestellten Dampfabscheider von flüssigem Wasser gereinigt wurde. Über eine zweite Sammelleitung 14 wird überhitzter Dampf dem Überhitzer 3 entnommen und einer Dampfturbine 20 zugeführt. Nach der Entspannung in der Dampfturbine 20 kann der Dampf dann einem nicht dargestellten Kondensator und weiterer Anlagenprozesstechnik *zugeführt werden,* wobei der kondensierte Dampf als flüssiger Wärmeträger dem Verdampfer 2 wiederum zugeführt wird.

Das erfindungsgemäße solarthermische Kraftwerk 1 kann ferner eine Zwischeneinspritzungsanlage 16 aufweisen, die mit dem Überhitzer 3 verbunden ist. Über die Zwischeneinspritzungsanlage 16 kann eine Zwischenkühlung in dem Überhitzer 3 durch Einspritzen von kühlerem Wärmeträger erfolgen, wodurch eine Temperaturregulierung möglich ist. Die Zwischeneinspritzung 16 ist vorzugsweise zwischen den zwei Parabolrinnenkollektoren 4b1, 4b2 angeschlossen. Ferner kann die Zwischeneinspritzungsanlage 16 mit der zweiten Sammelleitung 14 verbunden sein.

Durch die Anordnung der Parabolrinnenkollektoren 4a, 4b in Schleifen sind an dem ersten Ende 9 in dem Verdampfer 2 bzw. an dem ersten Ende 15 in dem Überhitzer 3 jeweils keine gemeinsamen Anschlussleitungen angeordnet, so dass jeweils zwischen den Schleifen 6a, 6b Zugänge 18 frei bleiben. Durch diese Zugänge können Wartungsfahrzeuge zwischen die Schleifen 6a, 6b fahren, um Wartungen an den Parabolrinnenkollektoren 4a, 4b vorzunehmen. Dadurch ist jeder der Parabolrinnenkollektoren 4a, 4b zumindest von einer Seite erreichbar, so dass die Wartung wesentlich vereinfacht wird.

Durch die erfindungsgemäße Anordnung in Schleifen 6a, 6b ist darüber hinaus eine kompakte Anordnung der Kollektoren zur Bildung des solarthermischen Kraftwerks 1 möglich, so dass in der Nord-Süd-Richtung, in der die Parabolrinnenkollektoren 4a, 4b angeordnet sind, ein geringerer Platzbedarf notwendig ist, als bei herkömmlichen solarthermischen Kraftwerken.

Da der Verdampfer 2 und der Überhitzer 3 örtlich getrennt voneinander angeordnet sind, können weitere anlagentechnische Komponenten des solarthermischen Kraftwerks 1, wie beispielsweise mindestens eine Dampfturbine 20 oder ein nicht dargestellter Leitstand und eine nicht näher bezeichnete weitere Anlagenprozesstechnik, zwischen dem Verdampfer 2 und dem Überhitzer 3 angeordnet sein, wodurch die Länge der Anschluss- und Verbindungsleitungen, wie beispielsweise der Zuführleitung 11, der Sammelleitung 12 und der zweiten Sammelleitung 14 optimiert werden kann. Dadurch können Druckverluste in diesen Leitungen reduziert werden.

Der Abstand von benachbarten ersten und zweiten Reihen 7, 8 in dem Verdampfer und benachbarten Parabolrinnenkollektoren 4b, 4b1, 4b2 in dem Überhitzer beträgt jeweils das 2,4-fache der Aperturweite eines Parabolrinnenkollektors 4a, 4b. Bei einer Aperturweite von 4,6m kann der Abstand somit beispielsweise ca. 11m betragen. Dadurch kann der Platzbedarf gegenüber herkömmlichen Kraftwerken, die häufig einen um 25% und mehr größeren Abstand besitzen, stark verringert werden. Gleichzeitig ist der Verlust durch Abschattung einzelner Parabolrinnenkollektoren durch benachbarte Parabolrinnenkollektoren nahezu vernachlässigbar, so dass insgesamt ein wesentlich höherer Energieertrag pro Fläche mit dem erfindungsgemäßen solarthermischen Kraftwerk 1 ermöglicht ist.

**Patentansprüche**

1. Solarthermisches Kraftwerk (1) mit Direktverdampfung eines Wärmeträgers mit Parabolrinnenkollektoren (4a, 4b), die jeweils aus mehreren Parabolrinnensegmenten (5) bestehen, wobei über die Parabolrinnenkollektoren (4a, 4b) thermische Energie des Sonnenlichts dem Wärmeträger zuführbar ist, und mit mindestens einer Dampfturbine (20), die über den verdampften Wärmeträger antreibbar ist, wobei eine erste Anzahl Parabolrinnenkollektoren (4a) einen Verdampfer (2) bilden, und eine zweite Anzahl Parabolrinnenkollektoren (4b) einen Überhitzer (3) bilden, wobei die Parabolrinnenkollektoren (4a) des Verdampfers (2) über eine gemeinsame Zuführung (11) und eine gemeinsame Sammelleitung (12) parallel angeschlossen sind und wobei die Parabolrinnenkollektoren (4b) des Überhitzers (3) über eine gemeinsame Zuführung und eine gemeinsame Sammelleitung (14) parallel angeschlossen sind, wobei die Parabolrinnenkollektoren (4a) des Verdampfers in mehreren Schleifen (6a) angeordnet sind, und wobei die Parabolrinnenkollektoren (4b) des Überhitzers (3) in mehreren Schleifen (6b) angeordnet sind, **dadurch gekennzeichnet, dass** die gemeinsame Zuführungsleitung (11) und die gemeinsame Sammelleitung (12) des Verdampfers (2) von einer Seite an die Schleifen (6a) der Parabolrinnenkollektoren (4a) des Verdampfers (2) herangeführt sind und dass die gemeinsame Zuführleitung und gemeinsame Sammelleitung (14) des Überhitzers (3) von einer Seite an die Schleifen (6b) der Parabolrinnenkollektoren (4b) des Überhitzers (3) herangeführt sind.

2. Solarthermisches Kraftwerk (1) nach Anspruch 1, **dadurch gekennzeichnet, dass** eine Schleife (6a, 6b) aus zwei bis acht Parabolrinnenkollektoren (4a, 4b) besteht.

3. Solarthermisches Kraftwerk (1) nach Anspruch 1 oder 2, **dadurch gekennzeichnet, dass** eine Schleife aus einer geraden Anzahl (N) von Parabolrinnenkollektoren besteht.

4. Solarthermisches Kraftwerk (1) nach einem der Ansprüche 1 bis 3, **dadurch gekennzeichnet, dass** eine Schleife (6a, 6b) aus einer ersten Reihe (7) und Parabolrinnenkollektoren (4a) und einer zu der ersten Reihe (7) parallel angeordneten zweiten Reihe (8) von Parabolrinnenkollektoren (4a) besteht, wobei die erste und die zweite Reihe (7, 8) an einem ersten Ende (9) zum Bilden der Schleife (6a, 6b) verbunden sind.

5. Solarthermisches Kraftwerk (1) nach Anspruch 4, **dadurch gekennzeichnet, dass** die erste und die zweite Reihe (7, 8) jeweils aus $\dfrac{N}{2}$ Parabolrinnenkollektoren (4a) bestehen.

6. Solarthermisches Kraftwerk (1) nach einem der Ansprüche 1 bis 5, **dadurch gekennzeichnet, dass** jeder Parabolrinnenkollektor (4a, 4b) zwischen acht und zehn Parabolrinnensegmente (5) aufweist.

7. Solarthermisches Kraftwerk (1) nach einem der Ansprüche 1 bis 6, **dadurch gekennzeichnet, dass** der Verdampfer (2) und der Überhitzer (3) örtlich getrennt angeordnet sind.

8. Solarthermisches Kraftwerk (1) nach einem der Ansprüche 1 bis 7, **dadurch gekennzeichnet, dass** zwischen dem Verdampfer (2) und dem Überhitzer (3) die mindestens eine Dampfturbine (20), ein Leitstand und/oder eine Anlagenprozesstechnik angeordnet ist.

9. Solarthermisches Kraftwerk (1) nach einem der Ansprüche 1 bis 8, **dadurch gekennzeichnet, dass** jede Schleife (6a) des Verdampfers (2) aus sechs Parabolrinnenkollektoren (4a) und/oder dass jede Schleife (6b) des Überhitzers (3) aus zwei Parabolrinnenkollektoren (4b) gebildet ist.

10. Solarthermisches Kraftwerk (1) nach einem der Ansprüche 1 bis 9, **dadurch gekennzeichnet, dass** jeder Parabolrinnenkollektor (4a) des Verdampfers (2) zehn Parabolrinnensegmente (5) und/oder jeder Parabolrinnenkollektor (4b) des Überhitzers (3) neun Parabolrinnensegmente (5) aufweist.

11. Solarthermisches Kraftwerk (1) nach einem der Ansprüche 1 bis 10, **dadurch gekennzeichnet, dass** der Überhitzer (3) eine Zwischeneinspritzungsanlage (16) aufweist.

12. Solarthermisches Kraftwerk (1) nach Anspruch 11, **dadurch gekennzeichnet, dass** die Zwischeneinspritzungsanlage (16) zwischen zwei Parabolrinnenkollektoren (4a, 4b) angeschlossen ist.

13. Solarthermisches Kraftwerk (1) nach einem der Ansprüche 1 bis 12, **dadurch gekennzeichnet, dass** der Abstand der Mittelachsen der ersten und der zweiten Reihe (7, 8) einer Schleife (6a, 6b) das 2,4-fache der Aperturweite eines Parabolrinnenkollektors (4a, 4b) beträgt.

14. Solarthermisches Kraftwerk (1) nach einem der Ansprüche 1 bis 13, **dadurch gekennzeichnet, dass** der Abstand der Mittelachse der zweiten Reihe (8) einer Schleife (6a) zu der Mittelachse der ersten Reihe (7) einer benachbarten Schleife (6a) das 2,4-fache der Aperturweite eines Parabolrinnenkollektors (4a, 4b) beträgt.

**Claims**

1. A solar-thermal power plant (1) with direct evaporation of a heat transfer medium, comprising parabolic trough collectors (4a, 4b), each consisting of a plurality of parabolic trough segments (5), wherein thermal energy of the sunlight can be supplied to the heat transfer medium via the parabolic trough collectors (4a, 4b), and comprising at least one steam turbine (20) which can be driven by the evaporated heat transfer medium, wherein a first number of parabolic trough collectors (4a) form a evaporator (2) and a second number of parabolic trough collectors (4b) form a superheater (3), wherein the parabolic trough collectors (4a) of the evaporator (2) are connected in parallel via a common supply line (11) and a common manifold (12), and wherein the parabolic trough collectors (4b) of the superheater (3) are connected in parallel via a common supply line and a common manifold (14), wherein the parabolic trough collectors (4a) of the evaporator are arranged in a plurality of loops (6a), and wherein the parabolic trough collectors (4b) of the superheater (3) are arranged in a plurality of loops (6b),
**characterized in that**
the common supply line (11) and the common manifold (12) of the evaporator (2) are led, from one side, to the loops (6a) of the parabolic trough collectors (4a) of the evaporator (2), and the common supply line and the common manifold (14) of the superheater (3) are led, from one side, to the loops (6b) of the parabolic trough collectors (4b) of the superheater (3).

2. The solar-thermal power plant (1) according to claim 1, **characterized in that** a loop (6a, 6b) consists of two to eight parabolic trough collectors (4a, 4b).

3. The solar-thermal power plant (1) according to claim 1 or 2, **characterized in that** a loop consists of an even number (N) of parabolic trough collectors.

4. The solar-thermal power plant (1) according to any one of claims 1 to 3, **characterized in that** a loop (6a, 6b) consists of a first row (7) of parabolic trough collectors (4a) and a second row (8) of parabolic trough collectors (4a) which is arranged parallel to the first row (7), wherein the first and the second row (7, 8) are connected at a first end (9) for forming the loop (6a, 6b).

5. The solar-thermal power plant (1) according to claim 4, **characterized in that** the first and the second row (7, 8) each consist of $\dfrac{N}{2}$ parabolic trough collectors (4a).

6. The solar-thermal power plant (1) according to any one of claims 1 to 5, **characterized in that** each parabolic trough collector (4a, 4b) comprises eight to ten parabolic trough segments (5).

7. The solar-thermal power plant (1) according to any one of claims 1 to 6, **characterized in that** the evaporator (2) and the superheater (3) are spatially separated.

8. The solar-thermal power plant (1) according to any one of claims 1 to 7, **characterized in that** said at least one steam turbine (20), a control station and/or process technology equipment of the plant, are arranged between the evaporator (2) and the superheater (3).

9. The solar-thermal power plant (1) according to any one of claims 1 to 8, **characterized in that** each loop (6a) of the evaporator (2) is formed of six parabolic trough collectors (4a) and/or that each loop (6b) of the superheater (3) is formed of two parabolic trough collectors (4b).

**10.** The solar-thermal power plant (1) according to any one of claims 1 to 9, **characterized in that** each parabolic trough collector (4a) of the evaporator (2) comprises ten parabolic trough segments (5) and/or each parabolic trough collector (4b) of the superheater (3) comprises nine parabolic trough segments (5).

**11.** The solar-thermal power plant (1) according to any one of claims 1 to 10, **characterized in that** the superheater (3) comprises an intermediate injection installation (16).

**12.** The solar-thermal power plant (1) according to claim 11, **characterized in that** the intermediate injection installation (16) is connected between two parabolic trough collectors (4a, 4b).

**13.** The solar-thermal power plant (1) according to any one of claims 1 to 12, **characterized in that** the distance between the center axes of the first and the second row (7, 8) of a loop (6a, 6b) is 2.4 times the aperture width of a parabolic trough collector (4a, 4b).

**14.** The solar-thermal power plant (1) according to any one of claims 1 to 13, **characterized in that** the distance between the center axis of the second row (8) of a loop (6a) and the center axis of the first row (7) of an adjacent loop (6a) is 2.4 times the aperture width of a parabolic trough collector (4a, 4b).

**Revendications**

**1.** Centrale solaire thermique (1) à évaporation directe d'un caloporteur comprenant des collecteurs (4a, 4b) en forme de goulottes paraboliques, qui comportent chacun une pluralité de segments de goulotte parabolique (5), l'énergie thermique de la lumière solaire étant amenée au caloporteur par le biais des collecteurs (4a, 4b) en forme de goulottes paraboliques, et au moins une turbine à vapeur (20) qui peut être entraînée par le caloporteur vaporisé, un premier nombre de collecteurs (4a) en forme de goulottes paraboliques formant un évaporateur (2) et un deuxièmes nombre de collecteurs (4b) en forme de goulottes paraboliques formant un surchauffeur (3), les collecteurs (4a) en forme de goulottes paraboliques de l'évaporateur (2) étant raccordées en parallèle par le biais d'une conduite d'alimentation commune (11) et une conduite de collecte commune (12) et les collecteurs (4b) en forme de goulottes paraboliques du surchauffeur (3) étant raccordées en parallèle par le biais d'une conduite alimentation commune et d'une conduite de collecte commune (14), les collecteurs (4a) en forme de goulottes paraboliques de l'évaporateur étant disposées suivant une pluralité de boucles (6a), et les collecteurs (4b) en forme de goulottes paraboliques du surchauffeur (3) étant disposées suivant une pluralité de boucles (6b), **caractérisée en ce que** la conduite d'alimentation commune (11) et la conduite de collecte commune (12) de l'évaporateur (2) sont amenées d'un côté aux boucles (6a) des collecteurs (4a) en forme de goulottes paraboliques de l'évaporateur (2) et **en ce que** la conduite d'alimentation commune et la conduite de collecte commune (14) du surchauffeur (3) sont amenées d'un côté aux boucles (6b) des collecteurs (4b) en forme de goulottes paraboliques du surchauffeur (3).

**2.** Centrale solaire thermique (1) selon la revendication 1, **caractérisée en ce qu'**une boucle (6a, 6b) comprend deux à huit collecteurs (4a, 4b) en forme de goulottes paraboliques.

**3.** Centrale solaire thermique (1) selon la revendication 1 ou 2, **caractérisée en ce qu'**une boucle comprend un nombre pair (N) de collecteurs en forme de goulottes paraboliques.

**4.** Centrale solaire thermique (1) selon l'une des revendications 1 à 3, **caractérisée en ce qu'**une boucle (6a, 6b) comprend une première rangée (7) de collecteurs (4a) en forme de goulottes paraboliques et une deuxième rangée (8), parallèle à la première rangée (7), de collecteurs (4a) en forme de goulottes paraboliques, les première et deuxièmes rangées (7, 8) étant reliées à une première extrémité (9) pour former la boucle (6a, 6b).

**5.** Centrale solaire thermique (1) selon la revendication 4, **caractérisée en ce que** les première et deuxième rangées (7, 8) comprennent chacune N/2 collecteurs (4a) en forme de goulottes paraboliques.

**6.** Centrale solaire thermique (1) selon l'une des revendications 1 à 5, **caractérisée en ce que** chaque collecteur (4a, 4b) en forme de goulotte parabolique comporte entre huit et dix segments de goulotte parabolique (5).

**7.** Centrale solaire thermique (1) selon l'une des revendications 1 à 6, **caractérisée en ce que** l'évaporateur (2) et le surchauffeur (3) sont disposés de manière localement séparée.

**8.** Centrale solaire thermique (1) selon l'une des revendications 1 à 7, **caractérisée en ce qu'**au moins une turbine à vapeur (20), une station de commande et/ou une technique de processus d'installation sont disposées entre l'évaporateur (2) et le surchauffeur (3).

**9.** Centrale solaire thermique (1) selon l'une des revendications 1 à 8, **caractérisée en ce que** chaque boucle (6a) de l'évaporateur (2) est formée de six collecteurs (4a) en forme de goulottes paraboliques et/ou **en ce que** chaque boucle (6b) du surchauffeur (3) est formée de deux collecteurs (4b) en forme de goulottes paraboliques.

10. Centrale solaire thermique (1) selon l'une des revendications 1 à 9, **caractérisée en ce que** chaque collecteur (4a) en forme de goulottes paraboliques de l'évaporateur (2) comporte dix segments de goulotte parabolique (5) et/ou chaque collecteur (4b) en forme de goulottes paraboliques du surchauffeur (3) comporte neuf segments de goulotte parabolique (5).

11. Centrale solaire thermique (1) selon l'une des revendications 1 à 10, **caractérisée en ce que** le surchauffeur (3) comporte une installation d'injection intermédiaire (16).

12. Centrale solaire thermique (1) selon la revendication 11, **caractérisée en ce que** l'installation d'injection intermédiaire (16) est raccordée entre deux collecteurs (4a, 4b) en forme de goulottes paraboliques.

13. Centrale solaire thermique (1) selon l'une des revendications 1 à 12, **caractérisée en ce que** la distance entre les axes centraux des première et deuxième rangées (7, 8) d'une boucle (6a, 6b) est égale à 2,4 fois la largeur d'ouverture d'un collecteur (4a, 4b) en forme de goulotte parabolique.

14. Centrale solaire thermique (1) selon l'une des revendications 1 à 13, **caractérisée en ce que** la distance de l'axe central de la deuxième rangée (8) d'une boucle (6a) à l'axe central de la première rangée (7) d'une boucle adjacente (6a) est égale à 2,4 fois la largeur d'ouverture d'une collecteur (4a, 4b) en forme de goulotte parabolique.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2053242 A2
- DE 10152968 C1
- DE 102006021972 A1
- WO 2010145970 A2
- DE 10326027 A1
- DE 102009047204 A1